(19)

**Europäisches Patentamt**
**European Patent Office**
**Office européen des brevets**

(11) **EP 2 557 892 A1**

(12) **EUROPEAN PATENT APPLICATION**

(43) Date of publication:
**13.02.2013 Bulletin 2013/07**

(51) Int Cl.:
***H04W 84/20*** *(2009.01)*

(21) Application number: **11177330.5**

(22) Date of filing: **11.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Pioneer Digital Design Centre Ltd Slough SL2 4QP (GB)**

(72) Inventor: **The designation of the inventor has not yet been filed**

(74) Representative: **Haley, Stephen et al Gill Jennings & Every LLP The Broadgate Tower 20 Primrose Street London EC2A 2ES (GB)**

(54) **Mobile data sharing networks**

(57)     A method for data communications in a cellular communications network obtains position information for nodes, within the coverage area of a cellular network base station, which are each capable of communicating using the cellular communications network via the base station. A selected node is appointed as a proxy node based upon its position, and from the remaining nodes, an ad-hoc network cluster of nodes about the proxy node is formed.

At the proxy node, data received from nodes in the network cluster is aggregated for onward transmission to the cellular network base station.

FIG. 4

**Description**

This invention relates to mobile communications networks and more particularly, though not solely, to the formation and operation of ad-hoc networks in cellular communications networks for enabling mobile nodes to share network capacity while reducing contention and overheads.

Mobile devices are increasingly becoming ubiquitous users of mobile data networks. A number of future applications will depend on the distribution of highly granular units of information (that is, a large total number of information units which are each relatively small in volume) in a timely manner between devices and their associated service provider or cloud infrastructure. By way of example, a future application could for example require a mobile sensor device, such as a mobile phone device to continuously monitor its owner's key health indicators, such as heart-rate, blood pressure, white-cell count and upload those parameters to that individual's health-insurance provider via the Internet. Another example might be a consumer's car contacting its manufacturer continuously, in order to upload information concerning its location and key operational/safety parameters, such as ABS/traction information, tyre pressure and fuel consumption.

Mobile data access networks implement a contended communication medium. Devices contend for frequency channels in the case of a FDM (Frequency - Division Multiplexing) based network, or for access time slots in the case of a TDM (Time-Division Multiplexing-based networks. Upstream capacity also tends to be restricted in general purpose networks in favour of downstream capacity in order to match the consumption patterns of the typical consumer. Minimising both the number of concurrent connections and the granularity and therefore frequency of transactions with a cellular base station are therefore desirable.

Large numbers of discrete messages from devices within a highly populated cell presents an operational problem. Mobile devices typically send whenever they want and, depending on the MAC (Medium Access Control) protocol that applies to the network, collisions can occur that require resends reducing overall network efficiency — often prohibitively - thereby limiting the viability of future sensing and/or data sharing applications.

This invention applies to any system in which relatively small units of time-sensitive information need to be uploaded from mobile nodes to service provider machinery on the Internet on a continual basis, and moreover in the presence of other mobile data applications sharing the same access medium.

US7822384B discloses a mobile data network in which mobile devices form an ad-hoc network with one of the mobile devices, which is in range of a fixed cellular access point, acting as a relay for transmissions from other mobile electronic devices that are out of range of the fixed cellular access point.

It is an object of this invention to go at least some way towards overcoming at least some of the above disadvantages.

Accordingly, in a first aspect, the invention may broadly be said to consist in a method for data communications in a cellular communications network comprising the steps of:

obtaining position information for nodes, within the coverage area of a cellular network base station, which are each capable of communicating using the cellular communications network via the base station;

appointing a selected node as a proxy node based upon its position;

forming, from the remaining nodes, an ad-hoc network cluster of nodes about the proxy node; and

aggregating, at the proxy node, data received from nodes in the network cluster for onward transmission to the cellular network base station.

Preferably, the method further comprises the step of:

segmenting the nodes within the coverage area of the cellular network base station into groups based upon the obtained position information; wherein

the step of appointing comprises selecting a node within each group as a proxy node for that group;

the step of forming ad-hoc network clusters comprises forming an ad-hoc network cluster of nodes about the proxy node of each group; and

the proxy node of each group carries out the step of aggregating the data received from nodes in its cluster for onward transmission to the cellular network base station.

Preferably, the step of appointing selected nodes within each group as a proxy node is carried out by a collector device which is part of the core cellular network infrastructure.

Preferably, the collector device appoints a selected node within each group as a proxy node using the aggregated data from the proxy node or nodes.

Preferably, the data received at a proxy node from a node in its cluster includes sensor output data, an identifier of the node, the position information of the node, the node's speed and the node's direction of movement.

Preferably, nodes having a speed above a predetermined threshold are not appointed as proxy nodes and are not included in the step of forming ad-hoc network clusters.

Preferably, each group of nodes is located within a different region of the cellular base station's coverage area comprising a sector from a chosen point within the coverage area.

Preferably, the position information is used to calculate the distance of each node from the chosen point, and wherein the step of appointing a selected node within each group as a proxy node is based upon the calculated distance and, optionally, the strength of a signal transmitted by the node to the cellular base station, as detected by the cellular base station.

Preferably, all of the nodes in a group are ordered based upon both the calculated distance to the chosen position within the cellular base station's coverage area and also the node's signal strength, as detected by the cellular base station, and wherein proxy nodes are selected from the ordered list.

Preferably, every nth node in the ordered list is selected as a proxy node, wherein n approximates a desired size for each cluster.

In a second aspect, the invention may broadly be said to consist in a cellular communications network comprising:

core network infrastructure including at least one cellular base station; and
a plurality of nodes that are each capable of communicating using the cellular communications network via a particular one of the at least one cellular base station;
wherein the core network infrastructure:

obtains position information for nodes within the coverage area of the particular cellular network base station which communicate using the cellular network via the particular base station; and
appoints a selected node as a proxy node based upon its position;

wherein, from the remaining nodes, an ad-hoc network cluster of nodes is formed about the proxy node; and
wherein the proxy node aggregates data received from nodes in the network cluster for onward transmission to the particular cellular network base station.

Preferably, the core network infrastructure furthermore:

segments the nodes within the coverage area of the particular cellular network base station, which communicate using the cellular network via the particular base station, into groups based upon the obtained position information; and
appoints a selected nodes within each group as a proxy node;
wherein, from the remaining nodes, ad-hoc network clusters of nodes are formed about each proxy node; and
wherein each proxy node aggregates data received from nodes in its cluster for onward transmission to the particular cellular network base station.

Preferably, the core network infrastructure further comprises a collector device which appoints the selected node or nodes as proxy nodes.

Preferably, the collector device appoints a selected node within each group as a proxy node using the aggregated data from the proxy node or nodes.

Preferably, the data received at a proxy node from a node in its cluster includes sensor output data, an identifier of the node, the position information of the node, the node's speed and the node's direction of movement.

Preferably, nodes having a speed above a predetermined threshold are not considered for appointment as a proxy node and are not included in an ad-hoc network cluster.

Preferably, each group of nodes is located within a different region of the particular cellular base station's coverage area comprising a sector from a chosen point within the coverage area,
wherein the position information is used to calculate the distance of each node from the chosen point, and
wherein the appointment of a proxy node is based upon the calculated distance and, optionally, based upon the strength of a signal transmitted by the node to the cellular base station, as detected by the cellular base station.

An example of the present invention will now be described with reference to the accompanying drawings, in which:

Figure 1 is a schematic diagram showing the coverage areas of plural cellular base stations, one of which has been enlarged to illustrate ad-hoc clusters of nodes about proxy nodes in accordance with the data communications method of the present invention;
Figure 2 is a diagram demonstrating communications between mobile nodes and application-specific data collectors in accordance with the data communications method of the present invention
Figure 3 is a diagram similar to Figure 2, showing details of the data aggregation feature of the present invention;
Figure 4 is a diagram illustrating cell coverage segmentation, proxy node selection and dynamic ad-hoc clustering of nodes about the proxy nodes in accordance with an embodiment of the present invention; and
Figures 5A and 5B combine to form a diagram illustrating interactions and dataflows between different components of the communications network according to the present invention illustrating, in order from top to bottom, the mobile node operating in an unclustered mode, joining a cluster, leaving a cluster, and becoming a proxy node.

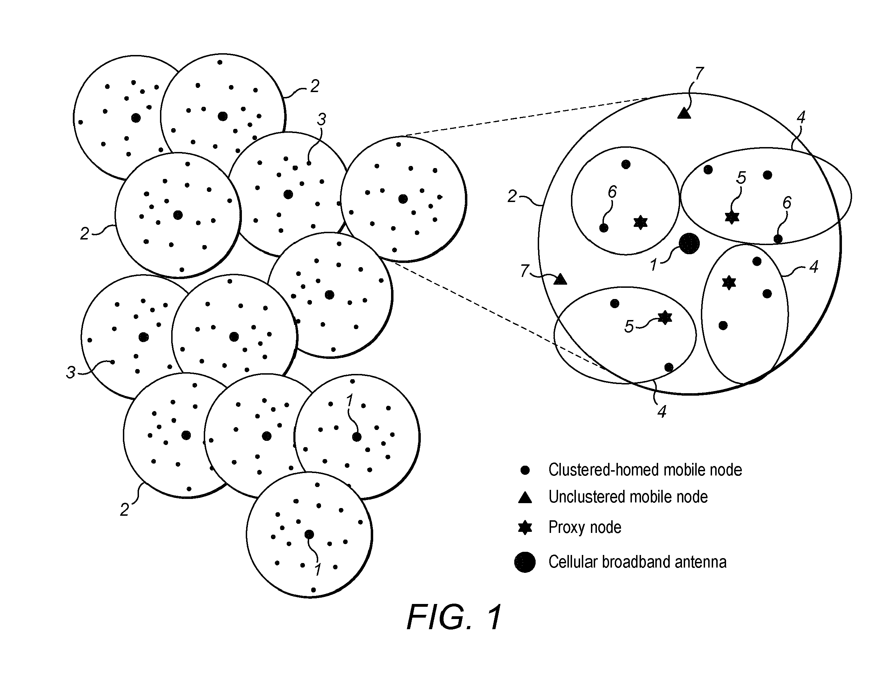

With reference to the drawings and in particular Figure 1, a number of cellular base stations or cellular broadband antennas 1 are shown at the centre of circular regions 2 approximating their respective coverage areas (also referred to as a "cell"). A number of mobile nodes 3 such as cellular telephones or personal computers with cellular telephone (e.g. 3G or 4G) access capability are shown positioned within the respective coverage areas of particular base stations. Each mobile node 3 within a particular coverage area 2 is capable of communicating (both voice and data communications) in the cellular telephone network via the particular base station.

Each mobile node, in addition to having the capability of communicating with an in-range cellular base station 1, is also provided with a secondary communications capability such as Wi-Fi (802.11 x), WLAN/WPAN (for example, Bluetooth™ or ZigBee®) for directly connecting with other mobile nodes. Each mobile node also has the capability to determine its location, for example by incorporating a GPS (Geographic Positioning System) antenna and processing hardware/software, or via the cellular network through triangulation of the signal strengths of fixed contactable cellular base stations 1.

As is shown in Figure 1, many of the mobile nodes 3 within the coverage area 2 of a particular cellular base station 1, are clustered into groups 4. Within each ad-hoc network 4, one of the mobile nodes is selected as a proxy (or master) node 5 which establishes a secondary mobile ad-hoc wireless network to which other mobile nodes in their vicinity can connect via their secondary communications capability, in addition to the primary upstream connection that all nodes use to connect to the cell itself, i.e. the 3G or 4G radio. The formation of such ad-hoc networks is an intrinsic part of existing Wi-Fi (802.11 x), WLAN/WPAN (Bluetooth™ or ZigBee®) standards. Individual mobile nodes 3 choose the ad-hoc network, and hence the specific proxy node 5 or cluster 4, to which they have the best connectivity expressed as a function of signal strength, for example. The mobile nodes 3 within the coverage area 2 may therefore be categorised as either proxy nodes 5, clustered nodes 6, or unclustered nodes 7.

Proxy nodes 5 are elected (as will be described below) by a coordinating system which is under the control of an authoritative party such as the mobile Internet Service Provider (ISP) within the communications system. Each proxy node 5 is tasked with aggregating and uploading data packets to the coordinating system 8 via the cellular base station 1 on behalf of all of the nodes in its cluster 4, thereby dramatically reducing the number of connections and the transaction rate at the cellular base station 1. That is, only the proxy node 5 of each cluster 4 transmits data packets to the cellular base station 1.

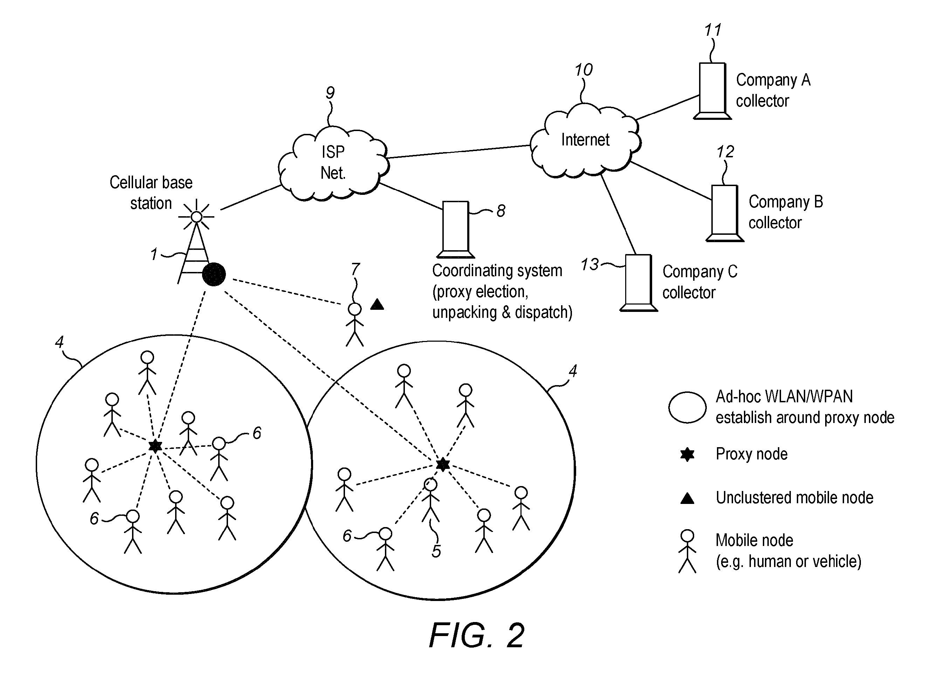

With reference now to Figure 2, the authoritative party is shown as a coordinating system 8 which is part of the cellular network infrastructure, in this case, part of ISP network 9. The coordinating system 8 could however conceivably be anywhere within the wider communications network contactable via cellular base station 1, including for example the Internet 10.

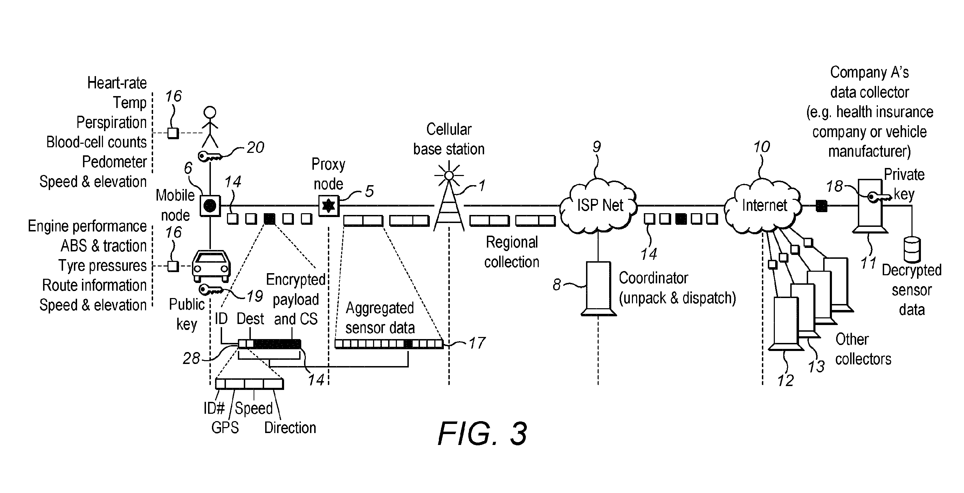

The invention will now be described in more detail. As shown in Figure 3, a mobile node 6 may be located on a person or in a vehicle, for example, and be connected to receive sensor data from one or more sensors 16 which monitor various physical parameters. For example, as mentioned above, sensor data may comprise a person's heart-rate, blood pressure, and/or white-cell count or a vehicle's ABS/traction information, tyre pressure and/or fuel consumption. The sensor data is processed into data packets 14 within a mobile node 3 for transmission on to a data collector, such as collectors 11, 12 and 13 for further processing, via the coordinating system 8. Mobile nodes 6 within a cluster 4 may of course address their data packets to different data collectors, depending upon the mobile sensing application that they are involved in.

The data packets 14 transmitted by a mobile node 3 to the network include not only the received sensor data but also additional parameters such as the node's position, identification, speed, direction of movement, and a packet destination identifier (such as the IP address of the targeted collector). The coordinating system 8 receives the data packets 14 of all mobile nodes 3 and tracks the location and speed of all mobile nodes in the coverage areas 2 of cellular base stations 1 within the network by monitoring the additional parameters.

Due to the autonomous and sporadic nature of mobile nodes 3, some may not bind to a cluster 4; or may join and leave clusters 4 intermittently and very often. For example, consider a motorbike traversing a motorway at significantly higher speed than other vehicles (containing mobile nodes) whose relative speed and positions are more stable and thus more amenable to the formation of a mobile data sharing network according to the present invention. These unclustered nodes 7 must communicate with the cellular base station 1 directly, just as they would in their default configuration, without the intermediation of a proxy node 5 and its associated infrastructure. Should the mobile characteristics of an unclustered node 7 change to favour clustering, for example if the aforementioned motorbike is parked up outside a supermarket, then it may become join a cluster.

Once associated to a proxy node 5 via its ad-hoc wireless network, each mobile node 6 of a cluster 4 may send encrypted sensor or other data packets 14 to their intended recipient (for example, an application-specific collector 11, 12 or 13) via the proxy node 5 as a forwarding agent, rather than sending the data packets to the recipient directly using its own dedicated communication channel with the base station 1. Each proxy node 5 aggregates the encrypted sensor data from each of its connected mobile nodes 6 to form aggregated sensor data 17 which is uploaded to the Internet 10 via the cellular base station 1 and coordinating system 8 at predetermined intervals or in accordance with some other preset timing routine.

Each proxy node 5 is responsible for forwarding the batches 17 of messages or uploads 14 to the coordinating system 8 running within the edge or core network of the communications system. By aggregating and forwarding messages 14 on behalf of potentially hundreds of mobile nodes (for example, in the case of a parking lot or traffic jam or for people shopping within a city centre) the total number of discrete messages is reduced, protocol overhead is minimised and therefore throughput is maximised, or simply freed for other services that may normally contend for usage of the cell's resources.

For the purposes of non-repudiation and trust, PKI (Public Key Infrastructure) may be incorporated into the system such that packets 14 transmitted from the mobile nodes 6 are both encrypted and digitally signed. The intended recipient of the data sent by a mobile node 6 (for example, collector 11) will possess a private key 18 and have distributed a public key 19 to participating mobile nodes that wish to participate in the mobile data sharing network according to this invention. The mobile nodes 6 may use this public key 19 to encrypt the payload (sensor data 16), and in addition may use their own private key 20 to generate a signature-based checksum over the entire unencrypted form of the message 14. These two simple measures ensure non-repudiation, privacy and integrity are maintained for data sent between individual mobile nodes 6 and data collectors 11, 12 and 13.

As shown in Figure 3, the ID field 28 of the data packets sent by a mobile node 6 incorporates the following fields:

- A unique identifier (ID) for the mobile node;
- the mobile node's last recorded position (for example, GPS coordinates);
- the mobile node's speed of motion; and
- the mobile node's direction of movement.

These additional parameters allow for refinements in how the proxy nodes 5 within the coverage area 2 of each cellular base station 1 are selected. These additional parameters also optionally allow for unclustered nodes 7 to be predetermined and filtered out during the proxy node selection process.

In addition to the ID and payload, each message contains a destination ("Dest.") indicator, which allows for the coordinating system 8 to unpack each of the aggregated messages 17 into their separate component packets 14 for dispatch to their intended recipient.

The coordinating system 8, typically residing in a less contended part of the core network infrastructure, receives batches 17 of messages from the various proxy nodes 5 it has elected, which it enumerates over using high-powered server equipment. Individual messages 14 are isolated and then dispatched to their target data collector 11, 12 or 13 (for example, the vehicle monitoring application of a car manufacturer or the early-warning system of a health-insurance/monitoring company). Only the collectors 11, 12 or 13 which have the secret private key 18 associated with a given application or service can decode and process the payload of the messages 14;

thus preserving individual privacy and enabling the required cooperation between nodes within a cluster to work in practice.

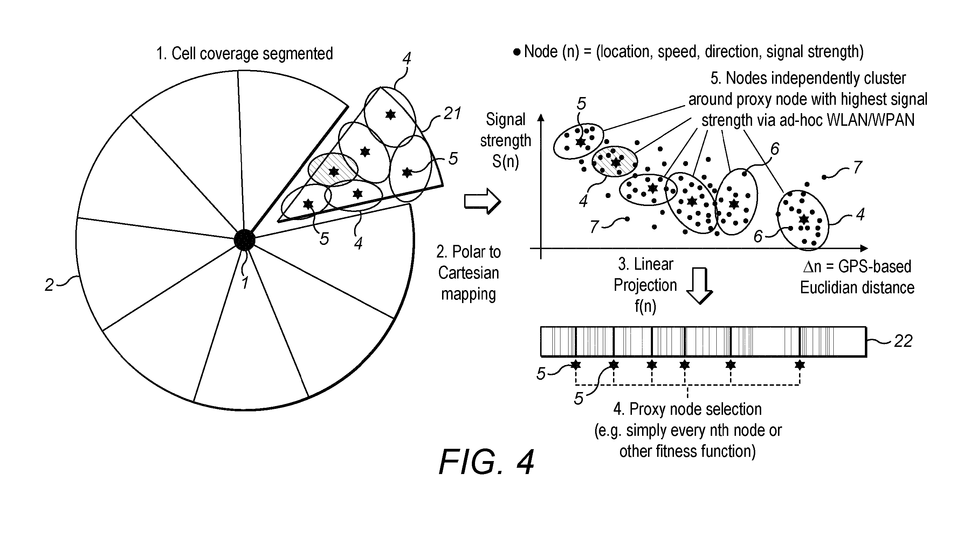

In order that clusters 4 can be dynamically configured, proxy nodes 5 must be appointed from within the collection of mobile nodes 3 covered by a cell 2. The following description relates to Figure 4 which provides an overview of one exemplary method for appointing mobile nodes 3 in a particular cell 2 as proxy nodes 5.

Firstly, the set of mobile nodes 3 within the cell coverage area 2 are segmented into segments 21 according to:

   a) the GPS location of the particular cellular base station 1 (that is, knowledge of the terrain surrounding the cellular base station); and
   b) knowledge of the relative positions of mobile nodes 3 within the coverage area 2 of the cellular base station 1.

With this information available, each mobile node's angle from a chosen polar axis (such as the position of the cellular base station 1) can be calculated along with its Euclidean distance, An, from the chosen polar axis.

Mobile nodes 3 within the cell 2 are then grouped according to a segmentation scheme. Depending on the density and distribution of mobile nodes 3 within the cell 2, various segment 21 sizes may be chosen in order to ultimately assist in achieving a desirable cluster 4 size. In the example shown in Figure 4 all of the segments 21 are sectors of the same shape and size. However, the shapes ands sizes of the segments 21 in any particular cellular base station coverage area 2 may be different, dependent upon requirements (a) and (b) referred to above.

Within each segment, each mobile node 3 with signal strength S(n) (as detected by the cellular base station 1) at a distance $\Delta n$ from the polar axis may be mapped to a partial ordering 22 of mobile nodes, according to the function:

$$f(n) = \omega'.S(n) + w''.\Delta n$$

wherein f(n-1) <= $f(n)$ and w' and w" are application-specific weights that may be tuned according to the cell's terrain, specific segment size or other environmental factors. Many different heuristics can dictate the number and selection of proxy nodes 5 for the segment from the partial ordering 22. For example, one simple method is to select every *nth* node in the partial ordering 22 as a proxy node, where *n* approximates the ultimately desired cluster size.

Once a mobile node 3 is appointed by the coordinating system 8 as a proxy node 5, it advertises this fact and establishes its secondary mobile ad-hoc wireless network which mobile nodes in its vicinity (seeing it as the only proxy node or the proxy node with the strongest signal strength) connect to form a cluster 4. Initially, proxy nodes 5 may be appointed by a different, perhaps arbitrary, method and then the above reasoned method may be used to continually refine the appointment of proxy nodes 5 to reduce the number of connections and the transaction rate at the cellular base station 1.

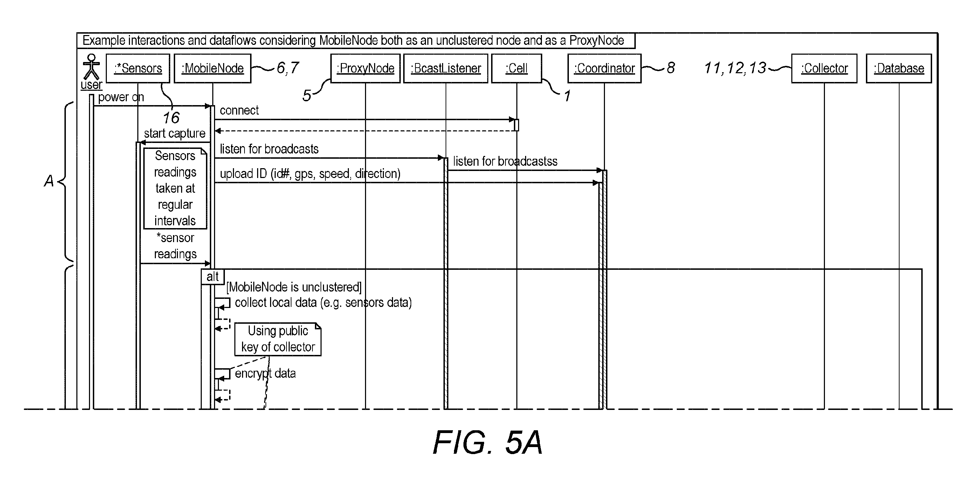

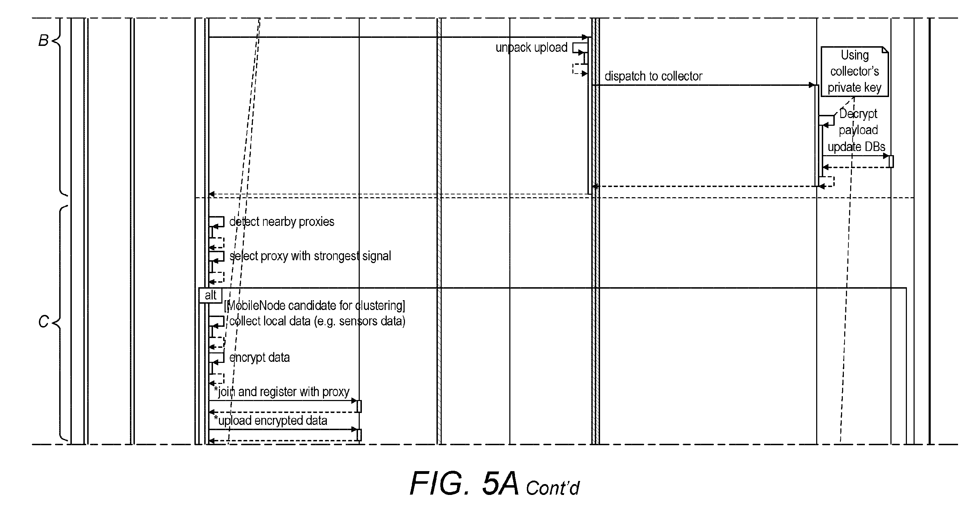

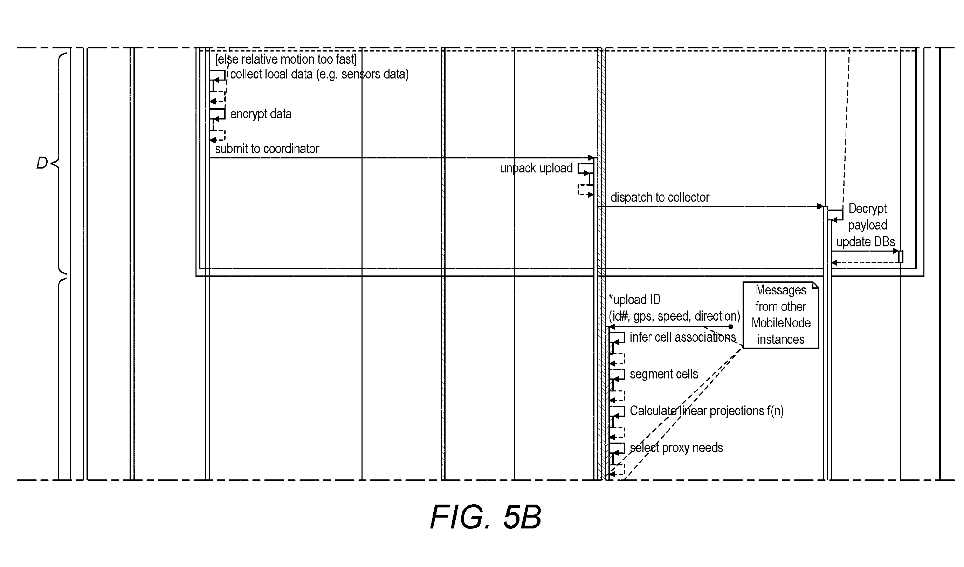

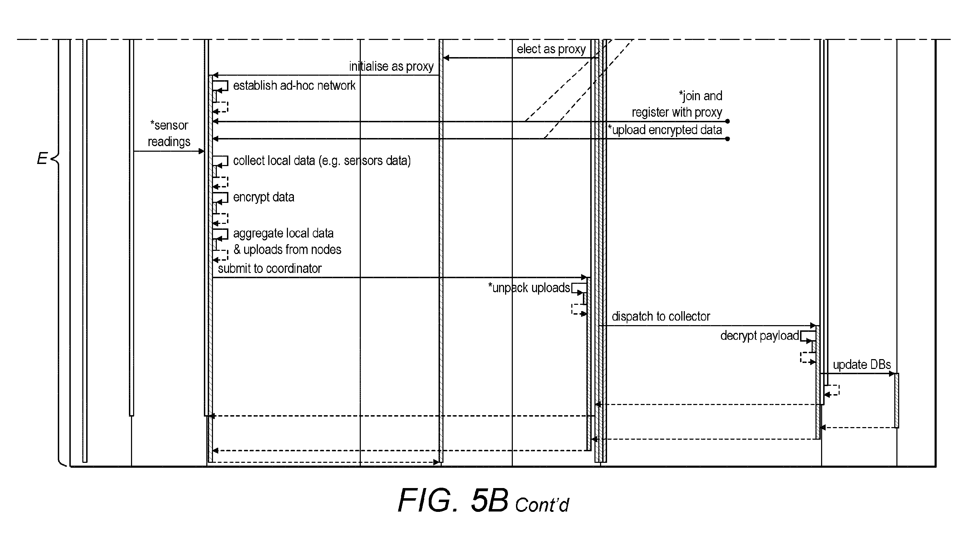

Figures 5a and 5b together form a diagram showing exemplary detailed dataflows and interactions between mobile nodes 3 (both as an unclustered node 7 and as a proxy node 5) and the other components of the communications network. The diagram includes the following sections:

A — mobile node startup,
B — unclustered operation of a mobile node (node communicating directly with the cellular base station without the intermediary of a proxy node),
C — mobile node joining a mobile ad-hoc network cluster,
D — mobile node returning to unclustered operation (leaving the ad-hoc network cluster), and
E — mobile node elected as a proxy node, establishing an ad-hoc network, aggregating sensor data from other clustered nodes with its own sensor data and submitting the aggregated data to the coordination system.

Accordingly, the present invention facilitates the dynamic and adaptive bonding of mobile nodes 3 together to form clusters 4 of devices, whose traffic is aggregated by specially elected proxy nodes 5 prior to being uploaded to a cellular base station 1 of the mobile data network. The method does not depend on specific facilities of the physical or MAC network layers at any point in the chain of communication and therefore may operate on all future mobile networks.

**Claims**

1. A method for data communications in a cellular communications network comprising the steps of:

obtaining position information for nodes, within the coverage area of a cellular network base station, which are each capable of communicating using the cellular communications network via the base station;
appointing a selected node as a proxy node based upon its position;
forming, from the remaining nodes, an ad-hoc network cluster of nodes about the proxy node; and
aggregating, at the proxy node, data received from nodes in the network cluster for onward transmission to the cellular network base station.

2. The method according to claim 1, further comprising the step of:

segmenting the nodes within the coverage area of the cellular network base station into groups based upon the obtained position information; wherein
the step of appointing comprises selecting a node within each group as a proxy node for that group;
the step of forming ad-hoc network clusters comprises forming an ad-hoc network cluster of nodes about the proxy node of each group; and
the proxy node of each group carries out the step of aggregating the data received from nodes in its cluster for onward transmission to the cellular network base station.

3. The method according to 2, wherein the step of appointing a selected node within each group as a proxy node is carried out by a collector device which is part of the core cellular network infrastructure.

4. The method according to claim 3, wherein the collector device appoints a selected node within each group as a proxy node using the aggregated data from the proxy node or nodes.

5. The method according to any one of the preceding claims, wherein the data received at a proxy node from a node in its cluster includes sensor output data, an identifier of the node, the position information of the node, the node's speed and the node's direction of movement.

6. The method according to claim 5, wherein nodes having a speed above a predetermined threshold are not appointed as proxy nodes and are not included in the step of forming ad-hoc network clusters.

7. The method according to claim 2, wherein each group of nodes is located within a different region of the cellular base station's coverage area comprising a sector from a chosen point within the coverage area.

8. The method according to claim 7, wherein the position information is used to calculate the distance of each node from the chosen point, and wherein the step of appointing a selected node within each group as a proxy node is based upon the calculated distance and, optionally, the strength of a signal transmitted by the node to the cellular base station, as detected by the cellular base station.

9. The method according to claim 8, wherein all of the nodes in a group are ordered based upon both the calculated distance to the chosen position within the cellular base station's coverage area and also the node's signal strength, as detected by the cellular base station, and wherein proxy nodes are selected from the ordered list.

10. The method according to claim 9, wherein every nth node in the ordered list is selected as a proxy node, wherein n approximates a desired size for each cluster.

11. A cellular communications network comprising:

core network infrastructure including at least one cellular base station; and
a plurality of nodes that are each capable of communicating using the cellular communications network via a particular one of the at least one cellular base station;
wherein the core network infrastructure:

obtains position information for nodes within the coverage area of the particular cellular network base station which communicate using the cellular network via the particular base station; and
appoints a selected node as a proxy node based upon its position;

wherein, from the remaining nodes, an ad-hoc network cluster of nodes is formed about the proxy node; and
wherein the proxy node aggregates data received from nodes in the network cluster for onward transmission to the particular cellular network base station.

12. The cellular communications network according to claim 11, wherein the core network infrastructure furthermore:

segments the nodes within the coverage area of the particular cellular network base station, which communicate using the cellular network via the particular base station, into groups based upon the obtained position information; and
appoints a selected nodes within each group as a proxy node;
wherein, from the remaining nodes, ad-hoc network clusters of nodes are formed about each proxy node; and
wherein each proxy node aggregates data received from nodes in its cluster for onward transmission to the particular cellular network base station.

13. The cellular communications network according to claim 11 or claim 12, wherein the core network infrastructure further comprises a collector device which appoints the selected node or nodes as proxy nodes.

14. The cellular communications network according to claim 13, wherein the collector device appoints a selected node within each group as a proxy node using the aggregated data from the proxy node or nodes.

15. The cellular communications network according to any one of claims 11 to 14, wherein the data received at a proxy node from a node in its cluster includes sensor output data, an identifier of the node, the position information of the node, the node's speed and the node's direction of movement.

16. The cellular communications network according to claim 15, wherein nodes having a speed above a predetermined threshold are not considered for appointment as a proxy node and are not included in an ad-hoc network cluster.

17. The cellular communications network according to any one of claims 11 to 16,
wherein each group of nodes is located within a different region of the particular cellular base station's coverage area comprising a sector from a chosen point within the coverage area,
wherein the position information is used to calculate the distance of each node from the chosen point, and wherein the appointment of a proxy node is based upon the calculated distance and, optionally, based upon the strength of a signal transmitted by the node to the cellular base station, as detected by the cellular base station.

FIG. 1

Legend:
- ● Clustered-homed mobile node
- ▲ Unclustered mobile node
- ★ Proxy node
- ● Cellular broadband antenna

EP 2 557 892 A1

*FIG. 2*

Company A collector — 11

Internet — 10

Company B collector — 12

Company C collector — 13

ISP Net. — 9

Cellular base station

1

Coordinating system (proxy election, unpacking & dispatch) — 8

7

4

4

6

6

6

6

5

Ad-hoc WLAN/WPAN establish around proxy node

★ Proxy node

▲ Unclustered mobile node

Mobile node (e.g. human or vehicle)

EP 2 557 892 A1

FIG. 3

1. Cell coverage segmented

• Node (n) = (location, speed, direction, signal strength)

5. Nodes independently cluster around proxy node with highest signal strength via ad-hoc WLAN/WPAN

Signal strength S(n)

2. Polar to Cartesian mapping

3. Linear Projection f(n)

$\Delta n$ = GPS-based Euclidian distance

4. Proxy node selection (e.g. simply every nth node or other fitness function)

*FIG. 4*

EP 2 557 892 A1

FIG. 5A

EP 2 557 892 A1

B {

unpack upload

dispatch to collector

Using collector's private key

Decrypt payload

update DBs

C {

alt    [MobileNode candidate for clustering]

detect nearby proxies

select proxy with strongest signal

collect local data (e.g. sensors data)

encrypt data

*join and register with proxy

*upload encrypted data

*FIG. 5A* Cont'd

D

[else relative motion too fast]
collect local data (e.g. sensors data)

encrypt data

submit to coordinator

unpack upload

dispatch to collector

Decrypt payload

update DBs

*upload ID
(id#, gps, speed, direction)

Messages from other MobileNode instances

infer cell associations

segment cells

Calculate linear projections f(n)

select proxy needs

*FIG. 5B*

elect as proxy

initialise as proxy

establish ad-hoc network

*join and
register with proxy

*sensor
readings

*upload encrypted data

E

collect local data (e.g. sensors data)

encrypt data

aggregate local data
& uploads from nodes

submit to coordinator

*unpack uploads

dispatch to collector

decrypt payload

update DBs

*FIG. 5B* Cont'd

Europäisches
Patentamt

European
Patent Office

Office européen
des brevets

# EUROPEAN SEARCH REPORT

Application Number

EP 11 17 7330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/235175 A1 (NAGHIAN SIAMAK [FI] ET AL NAGHIAN SIAMAEK [FI] ET AL) 25 December 2003 (2003-12-25) | 1-5,7,8, 11-15,17 | INV. H04W84/20 |
| A | * figures 3-4 * <br> * paragraphs [0028], [0040], [0045] * <br> * paragraph [0055] - paragraph [0067] * <br> ----- | 6,9,10, 16 | |
| X | WO 2009/112937 A1 (UNIV CAPE TOWN [ZA]; LE THI HONG HANH [ZA]) 17 September 2009 (2009-09-17) <br> * page 7, line 1 - page 10, line 30 * <br> * figure 1 * <br> ----- | 1,2,7,8, 11,12,17 | |
| X | US 7 035 240 B1 (BALAKRISHNAN HARI [US] ET AL) 25 April 2006 (2006-04-25) <br> * figure 1B * <br> * column 16, line 53 - column 17, line 52 * <br> ----- | 1-3, 11-13 | |

TECHNICAL FIELDS
SEARCHED      (IPC)

H04W

The present search report has been drawn up for all claims

| Place of search | Date of completion of the search | Examiner |
|---|---|---|
| Munich | 17 November 2011 | Gavin Alarcon, Oscar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 11 17 7330

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | | Publication date | Patent family member(s) | | Publication date |
|---|---|---|---|---|---|
| US 2003235175 | A1 | 25-12-2003 | AU | 2003242883 A1 | 06-01-2004 |
| | | | CN | 1672446 A | 21-09-2005 |
| | | | EP | 1527641 A2 | 04-05-2005 |
| | | | KR | 20050016891 A | 21-02-2005 |
| | | | US | 2003235175 A1 | 25-12-2003 |
| | | | US | 2005153725 A1 | 14-07-2005 |
| | | | WO | 2004001519 A2 | 31-12-2003 |
| WO 2009112937 | A1 | 17-09-2009 | NONE | | |
| US 7035240 | B1 | 25-04-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7822384 B